# FASCICULE DE BREVET EUROPEEN

(11) **EP 4 023 909 B1**
(45) Date de publication et mention de la délivrance du brevet: **16.08.2023**
(21) Numéro de dépôt: 22150082.0
(22) Date de dépôt: 03.01.2022
(51) Int. Cl.: F16H 57/04, F16H 57/08, F02C 7/06, F02C 7/36

(54) **PORTE-SATELLITES POUR UN REDUCTEUR MECANIQUE DE TURBOMACHINE D AERONEF**
SATELLITENTRÄGER FÜR EIN REDUKTIONSGETRIEBE FÜR LUFTFAHRZEUG-TURBOTRIEBWERK
PLANET CARRIER FOR A GEARBOX OF AN AIRCRAFT TURBINE ENGINE

(30) Priorité: 05.01.2021 FR 2100060
(43) Date de publication de la demande: 06.07.2022
(73) Titulaire: Safran Transmission Systems, 92700 Colombes (FR)
(72) Inventeur: MOULY,, Guillaume Pierre, 77550 MOISSY-CRAMAYEL (FR); LAISNEZ,, Frederic Nicolas François, 77550 MOISSY-CRAMAYEL (FR); SIMON,, Adrien Louis, 77550 MOISSY-CRAMAYEL (FR)
(74) Mandataire: Gevers & Orès

(56) Documents cités:
- CN-B- 107 781 402
- FR-A1- 3 084 428

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, FR-A1-3 008 463, FR-A1-3 041 054, FR-A1-3 065 773, FR-A1-3 073 915, FR-A1-3 084 428 et FR-A1-3 092 889. Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés d'un ou plusieurs étages d'engrènement. Cet engrènement est assuré de différentes façons comme par contact, par friction ou encore par champs magnétique.

Les réducteurs ont un besoin d'apport d'huile pour lubrifier et refroidir les engrenages, cannelures, roulements et paliers. Dans le cas où le porte-satellites est tournant, l'huile au niveau des paliers de satellites ou des engrènements doit être appliquée dans un champ tournant. Il y a donc besoin de transférer l'huile du réservoir situé sur une partie stator vers le porte-satellites tournant qui porte des gicleurs d'huile. Ce transfert est couramment réalisé par le biais d'un OTB (acronyme de l'anglais *Oil Transfert Bearing*) Cependant, une fois dans le champ tournant, l'huile n'est plus sous pression. A haute vitesse, il est difficile d'atteindre toutes les zones à lubrifier avec l'huile à cause de l'effet de centrifugation. Il est alors primordial de rapprocher les gicleurs au plus près de ces zones. Une autre problématique est liée à la complexité du montage de ces gicleurs.

Le document CN-B-107781402 propose un porte-satellites comportant une multitudes de passages usinés qui alimentent des gicleurs et dont des extrémités sont obturées par des bouchons étanches. Le nombre de passages et de bouchons est toutefois relativement important et il existe un risque important, d'une part, de détérioration du porte-satellites lors de l'usinage des passages, et d'autre part, de fuites des passages par un mauvais montage des bouchons.

L'invention propose un perfectionnement à cette technologie qui permet de résoudre tout ou partie des problèmes de la technique antérieure.

### Résumé de l'invention

L'invention concerne un porte-satellites pour un réducteur mécanique de turbomachine, en particulier d'aéronef, ce porte-satellites comportant :
- une cage monobloc qui s'étend autour d'un axe X de rotation en définissant un logement interne configuré pour recevoir un solaire et des satellites du réducteur, et
- un système de lubrification comprenant :
- au moins un alésage formé dans la cage et s'étendant parallèlement à l'axe X sur plus de 30% d'une dimension axiale maximale de la cage, et
- pour ledit ou chaque alésage, au moins deux gicleurs rapportés sur la cage, chacun de ces gicleurs étant montés dans un évidement de la cage et comportant :
   + au moins un orifice de projection d'huile, et
   + un passage interne de mise en communication fluidique dudit au moins un orifice avec ledit alésage.
   caractérisé en ce que le système de lubrification comprend, pour ledit ou chaque alésage, un gicleur longitudinal qui s'étend dans une direction parallèle à l'axe X et qui est monté dans un évidement qui est relié directement à une extrémité longitudinale de l'alésage.

L'invention propose ainsi un système de lubrification amélioré pour porte-satellites de réducteur, qui comprend pour l'essentiel un alésage axial relié à plusieurs gicleurs rapportés et raccordés au plus près et de préférence directement à cet alésage axial. L'alésage axial peut être réalisé simplement par usinage du porte-satellites. L'alésage s'étend sur une partie significative de la dimension axiale de la cage, c'est-à-dire qu'il ne s'agit pas d'un simple orifice dans une paroi par exemple. Les évidements de logement des gicleurs peuvent également être réalisés par usinage. Les gicleurs sont ensuite engagés en force, frettés ou retenus par une vis, dans ces évidements par exemple.

Le système de lubrification peut comprendre plusieurs alésages axiaux répartis autour de l'axe précité. Le nombre d'alésages est par exemple fonction du nombre de satellites du réducteur, et est par exemple égal au nombre de satellites du réducteur.

L'invention est compatible pour l'alimentation en huile de roulements non centrifugés, d'engrènements, de cannelures, etc. Elle est également compatible d'une arrivée d'huile par OTB.

Le porte-satellites selon l'invention peut comprendre une ou plusieurs des caractéristiques suivantes, prises isolément les unes des autres, ou en combinaison les unes avec les autres, conformément à la dépendance des revendications:
- le système de lubrification comprend, pour ledit ou chaque alésage, au moins un gicleur transversal qui s'étend dans une direction perpendiculaire à l'axe X et qui est monté dans un évidement qui est relié directement à l'alésage ;
- l'évidement de montage du gicleur transversal est situé à une extrémité longitudinale dudit alésage ;
- le gicleur transversal comprend un orifice latéral de mise en communication fluidique dudit alésage avec le passage de ce gicleur transversal ;
- l'évidement de montage du gicleur transversal débouche dans ledit alésage à distance des extrémités longitudinales de cet alésage ;
- au moins un desdits gicleurs a une forme générale tubulaire et comprend une rainure annulaire périphérique de réception d'un joint torique d'étanchéité ;
- au moins un des gicleurs comprend une surface cylindrique externe de centrage configurée pour coopérer directement avec une surface cylindrique interne complémentaire de ladite cage ;
- au moins un des gicleurs comprend deux ou trois surfaces cylindriques externes de centrage, distantes l'une de l'autre ou les unes des autres ;
- au moins un des gicleurs comprend un méplat d'indexage et/ou une collerette annulaire sur sa surface cylindrique externe ou sur l'une de ses surfaces cylindriques externes ;
- au moins un des gicleurs comprend deux ou trois, voire plus, orifices de projection, qui sont alignés les uns derrière les autres et sont formés dans un bossage externe du gicleur ;
- au moins un des gicleurs comprend un unique orifice de projection qui s'étend directement dans le prolongement du passage interne de ce gicleur ;
- le porte-satellites comprend :
   - un gicleur longitudinal raccordé directement à une extrémité longitudinale dudit alésage,
   - un gicleur transversal raccordé directement à une extrémité longitudinale opposée dudit alésage, et
   - un, deux, voire plus, gicleurs transversaux supplémentaires raccordés audit alésage, à distance des extrémités longitudinales de cet alésage.

L'invention concerne en outre une turbomachine, en particulier d'aéronef, comportant un réducteur mécanique équipé d'un porte-satellites tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention ;
[Fig.2] la figure 2 est une vue partielle en coupe axiale d'un réducteur mécanique ;
[Fig.3] la figure 3 est une vue schématique partielle en perspective d'un réducteur mécanique, et illustre la technique antérieure à la présente invention ;
[Fig.4] la figure 4 est une vue schématique partielle en coupe axiale d'un porte-satellites selon l'invention pour un réducteur mécanique de turbomachine d'aéronef ;
[Fig.5] la figure 5 est une vue schématique en perspective d'un premier mode de réalisation d'un gicleur pour un porte-satellites selon l'invention ;
[Fig.6] la figure 6 est une vue schématique en perspective d'un deuxième mode de réalisation d'un gicleur pour un porte-satellites selon l'invention ;
[Fig.7] la figure 7 est vue agrandie d'une partie de la figure 4 ;
[Fig.8] la figure 8 est autre vue schématique partielle en coupe axiale du porte-satellites de la figure 4;
[Fig.9] la figure 9 est une vue schématique en perspective d'un troisième mode de réalisation d'un gicleur pour un porte-satellites selon l'invention ;
[Fig.10] la figure 10 est vue schématique partielle en perspective et en coupe axiale d'un réducteur mécanique selon l'invention.

### Description détaillée de l'invention

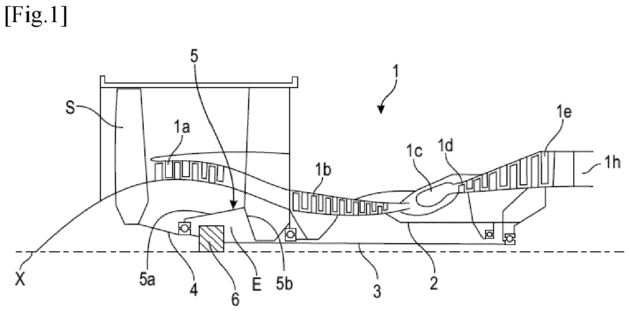

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

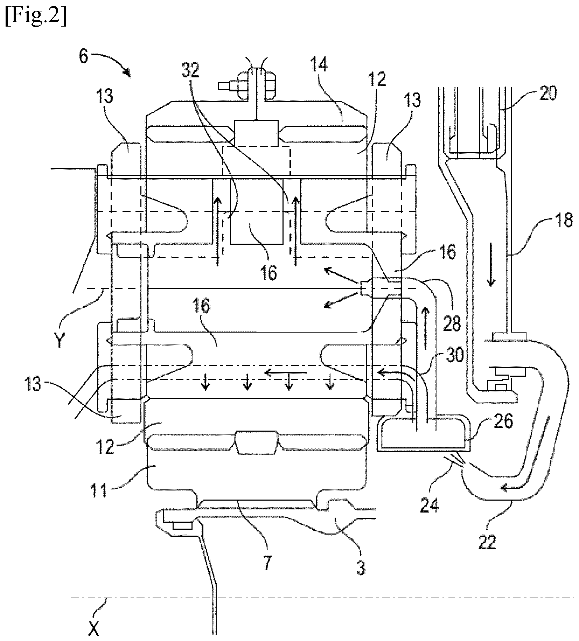

En référence à la figure 2, le réducteur 6 comprend une couronne 14 qui est fixée par l'intermédiaire d'un porte-couronne (non représenté) au stator 5 avec des moyens souples agencés pour lui permettre de suivre les mouvements éventuels de l'arbre de soufflante 4, dans certains cas de fonctionnement dégradés par exemple. Dans une architecture planétaire, le porte-couronne est composé d'une partie plus ou moins souple qui entraine la couronne et d'une partie maintenue par des roulements ou des paliers et sur lequel vient se monter la soufflante.

Le réducteur 6 est engrené d'une part sur l'arbre BP 3 par l'intermédiaire de cannelures 7 qui entraînent un pignon d'engrenage planétaire ou solaire 11, et d'autre part sur l'arbre de soufflante 4 qui est attaché à un porte-satellites 13. Classiquement, le solaire 11, dont l'axe de rotation X est confondu avec celui de la turbomachine 1, entraîne une série de pignons de satellites dits satellites 12, qui sont répartis régulièrement sur la circonférence du réducteur 6. Le nombre de satellites 12 est généralement défini entre trois et sept.

Les satellites 12 tournent aussi autour de l'axe X de la turbomachine sauf dans le cas d'un planétaire où ils tournent uniquement autour de leurs axes de révolution, en engrenant sur des dentures internes de la couronne 14.

Chacun des satellites 12 tourne librement autour d'un axe/palier de satellite 16 relié au porte-satellite 13, à l'aide d'un palier qui peut être lisse, comme représenté sur la figure 2, ou un palier à éléments roulants (roulements à billes ou à rouleaux).

La rotation des satellites 12 autour de leur axe de satellite 16, du fait de la coopération de leurs pignons avec les dentures de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

La figure 2 montre l'acheminement de l'huile vers le réducteur 6 et son cheminement à l'intérieur de celui-ci. Des flèches montrent sur la figure 2 le cheminement suivi par l'huile depuis, sur cet exemple, un réservoir tampon 18 lié au stator 5 de la turbomachine, jusqu'aux pignons et aux paliers à lubrifier.

Le réservoir tampon 18 est positionné à côté du réducteur 6, en partie haute de façon que l'huile puisse s'écouler vers le centre du réducteur par gravité. Ce réservoir 18 est alimenté par une canalisation d'acheminement 20, en provenance du réservoir principal du moteur (non représenté). L'huile s'écoule du réservoir tampon 18, pour déboucher dans un injecteur 22 dont l'extrémité calibrée est resserrée pour former un gicleur.

L'huile sort du gicleur sous la forme d'un jet 24, qui se forme sous la pression produite conjointement par la pression de la pompe d'alimentation et par le poids de la colonne d'huile située au-dessus de lui. Ce jet 24 est orienté avec une composante radiale dirigée vers l'extérieur du moteur et aboutit dans une coupelle cylindrique 26 à section radiale en U, dont l'ouverture du U est orientée en direction de l'axe X. Alors que l'injecteur 22 est fixe, la coupelle 26 est mobile en rotation autour de l'axe X et présente à tout instant une partie en U en face du gicleur. La coupelle 26 forme une cavité de retenue de l'huile, cette huile étant entraînée en rotation par la coupelle 26 dans le fond de laquelle elle se comprime sous l'action de la force centrifuge.

Du fond de la coupelle 26 partent une série de canalisations pour l'alimentation en huile des divers organes du réducteur 6 à lubrifier. Ces canalisations sont essentiellement de deux types. Une première série de canalisations 28, qui sont régulièrement réparties sur la périphérie du réducteur 6 et en nombre égal à celui des satellites 16, partent du fond de la coupelle 26 et pénètrent dans une cavité interne de chaque satellite 16, qui est refermée par le porte-satellites 13. Une seconde série de canalisations 30, qui sont également réparties régulièrement sur la périphérie du réducteur, partent du fond de la coupelle 26 pour se diriger dans l'espace situé entre deux satellites 13 consécutifs.

L'huile qui circule dans les premières canalisations 28 pénètre dans la cavité interne de chaque axe de satellite puis passe, du fait de la force centrifuge, dans des canaux de guidage 32, qui traversent ces axes en étant orientés radialement. Ces canaux 32 débouchent à la périphérie des axes de satellites, au niveau de leurs paliers supportant les satellites 16 et assurent ainsi la lubrification de ces paliers.

Les secondes canalisations 30 cheminent, depuis le fond de la coupelle 26 entre les satellites 16 et se divisent en général en plusieurs canaux (non représentés) qui acheminent l'huile vers les engrenages formés par les satellites 16, le solaire 11 et la couronne 14.

L'ensemble des paliers et engrenages du réducteur 10 est ainsi lubrifiés par l'huile qui est issue du gicleur 22 et qui est récoltée par la coupelle 26 située en face de lui.

Dans une autre technologie non représentée, l'alimentation en huile du système de lubrification du réducteur 6 est réalisée par l'intermédiaire d'un OTB qui permet de transférer de l'huile d'un repère fixe à un repère tournant sans besoin d'injecteurs ou gicleurs.

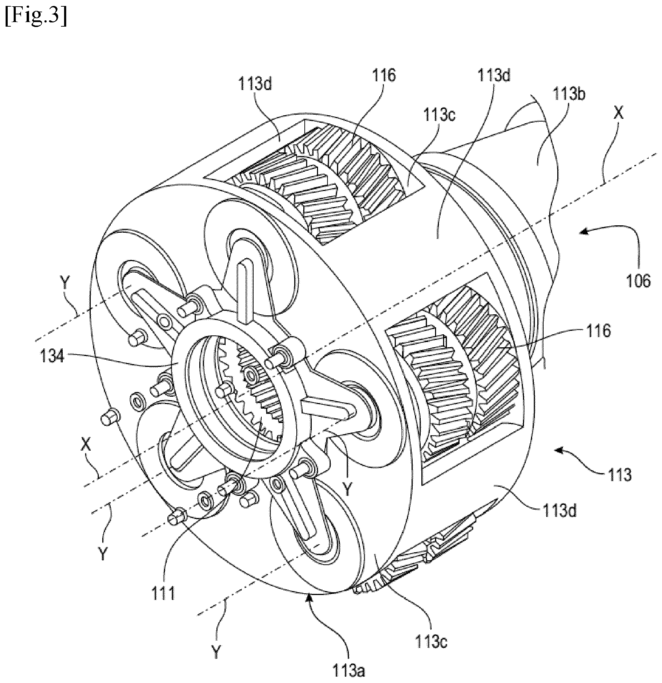

Les figures 3 à 10 illustrent un mode de réalisation d'un porte-satellites 113 et d'un réducteur 106 selon l'invention.

Les éléments du réducteur 106 et du porte-satellites 113 qui ont déjà décrits dans ce qui précède sont désignés par les mêmes références dans ce qui suit, augmentées d'une centaine. La description qui précède s'applique au réducteur 106 et au porte-satellites 113 dans la mesure où elle n'est pas contraire ou ne contredit pas ce qui suit.

Le porte-satellites 113 du réducteur 106 partiellement représenté à la figure 3 est monobloc et comprend une cage 113a formée d'une seule pièce avec un fût tubulaire 113b d'entraînement de l'arbre de soufflante 4. Autrement dit, cette technologie est préférée à la technologie dans laquelle le porte-satellites 113 comprend l'assemblage d'une cage avec un porte-cage.

La cage 113a du porte-satellites 113 comprend deux parois annulaires 113c sensiblement radiales et qui sont reliées entre elles à leur périphérie externe par des pontets 113d.

La cage 113a définit un logement interne configuré pour recevoir le solaire 111 et les satellites 116. L'une des parois 113c est reliée au fût 113bet l'autre des parois 113c comprend des orifices de montage du solaire 111 et des satellites 116.

Les pontets 113d définissent entre eux des espaces circonférentiels occupés en partie par les dentures des satellites 116.

Comme évoqué dans ce qui précède en relation avec la figure 2, le système de lubrification du réducteur 106 a pour fonction en général d'alimenter en huile les paliers des satellites 116 ainsi que les engrenages du réducteur 106.

Dans l'exemple représenté, l'alimentation en huile des satellites 116 est réalisé par un rouet 134 qui est rapporté et fixé sur la paroi 113c opposée au fût 113b, en étant centré sur l'axe X.

L'invention peut concerner la lubrification en huile des engrenages du réducteur 106 et/ou la lubrification des paliers des satellites 116, qui est réalisé par des gicleurs.

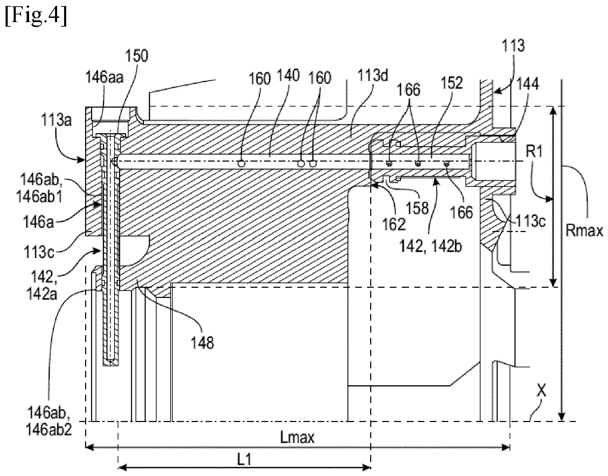

La figure 4 montre une vue partielle en coupe axiale d'un porte-satellites 113 selon l'invention, le plan de coupe passant par un des pontets 113d précités. Selon l'invention, la cage 113a du porte-satellites 113 comprend au moins un alésage 140 qui s'étend parallèlement à l'axe X et des gicleurs d'huile 142 qui sont rapportés sur la cage 113a et raccordés fluidiquement à l'alésage 140.

L'alésage 140 a une étendue longitudinale L1 représentant plus de 30%, et de préférence plus de 50%, d'une dimension axiale maximale Lmax de la cage 113a. Cet alésage 140 peut être formé par usinage et par exemple par perçage, depuis une des parois 113c de la cage. Dans l'exemple représenté, l'alésage 140 est formé à travers un évidement 144 de la paroi 113c reliée au fût 113b.

La figure 4 montre deux gicleurs 142a, 142b rapportés sur la cage 113a. Le gicleur 142a est un gicleur transversal dans la mesure où il s'étend en direction transversale ou perpendiculaire par rapport à l'axe X et donc par rapport à l'alésage 140. Le gicleur 142a est logé dans un évidement transversal 146a qui est situé à une extrémité longitudinale de l'alésage 140 et à proximité de la paroi 113c opposée au fût 113b.

L'évidement 146a est formé depuis la périphérie externe de la cage 113a et donc d'un des pontets 113d. L'évidement 146a comprend deux surfaces cylindriques 146aa, 146ab coaxiales et de diamètre différents, la première surface 146aa de plus grand diamètre débouchant sur la périphérie externe de la cage 113a et la seconde surface 146ab de plus petit diamètre s'étendant depuis la surface 146aa radialement vers l'intérieur et ayant par exemple une étendue radiale R1 représentant plus de 30%, et de préférence plus de 50%, d'une dimension radiale maximale Rmax de la cage 113a. Comme cela est visible à la figure 4, l'alésage 140 débouche dans l'évidement 146a, sur sa surface 146ab. Cette surface 146ab est ici interrompue et comprend une partie radialement externe 146ab1 et une partie radialement interne 146ab2 séparées l'une de l'autre par une gorge annulaire formée dans la paroi 113c et débouchant en direction axiale. La partie 146ab2 est ainsi formée dans un rebord cylindrique 148 de la paroi 113c s'étendant autour de l'axe X.

Ce rebord 148 est de préférence directement relié à l'arbre de soufflante 4 visible à la figure 1 de façon à ce que le couple transmis par le réducteur 6 à l'arbre de soufflante 4 passe par ce rebord 148. La gorge annulaire précitée permet de répartir les efforts de transmission du couple dans le porte-satellites 113.

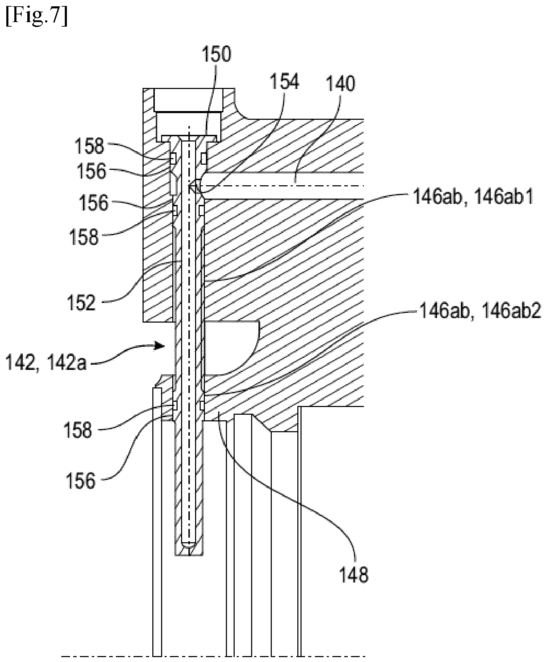

Le gicleur 142a est mieux visible à la figure 7 et a une forme générale tubulaire et comprend à une extrémité longitudinale une collerette annulaire 150. Le gicleur 142a est destiné à être engagé dans l'évidement 146a radialement depuis l'extérieur, jusqu'à ce que sa collerette 150 prenne appui sur l'épaulement cylindrique de liaison des surfaces 146aa, 146ab de l'évidement 146.

Un bouchon (non représenté) est de préférence rapporté sur la collerette 150 et dans la surface 142aa pour retenir le gicleur en direction radiale vers l'extérieur et pour obturer l'extrémité radialement externe du gicleur 142a.

Le gicleur 142a comprend au moins un orifice de projection d'huile et un passage interne 152 de mise en communication fluidique de cet orifice avec l'alésage 140. Pour cela, le gicleur 142a comprend un orifice transversal 154 qui est formé en regard du débouché de l'alésage. Pour garantir l'alignement de l'orifice 154 et de l'alésage 140, le gicleur 142a, et en particulier sa collerette 150, peut comprendre un moyen d'indexage avec un moyen complémentaire de la cage (ces moyens étant destinés à coopérer ensemble par coopération de formes par exemple).

Le gicleur 142a comprend des surfaces cylindriques externes 156 de centrage destinées à coopérer avec la surface 146ab de l'évidement 146a. Chacune de ces surfaces 156 comprend une rainure annulaire périphérique 158 de réception d'un joint torique d'étanchéité (non représenté). Deux des surfaces 156 sont situées respectivement de part et d'autre de l'orifice 154 pour garantir l'étanchéité du raccordement fluidique entre l'alésage 140 et le gicleur 142a. Une autre des surfaces 156 est située dans la partie 146ab2 et assure le centrage du gicleur 142a dans cette zone.

Les jeux entre le gicleur 142a et les surfaces 146aa, 146ab, en particulier entre les surfaces 146 adjacentes, permettent de ne pas soumettre de contraintes au gicleur 142a lors de la transmission du couple précité qui risque d'entraîner des déformations du porte-satellites 113 et notamment de son rebord 148.

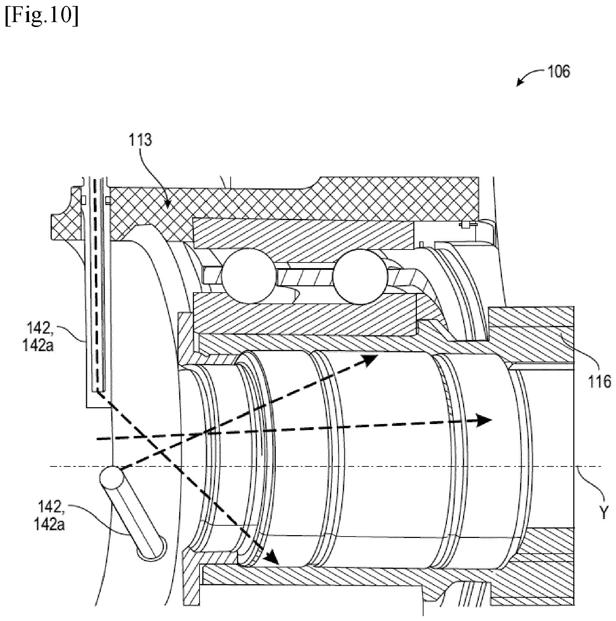

Le gicleur 142a peut comprendre un ou plusieurs orifices de projection d'huile, par exemple à son extrémité radialement interne. Ces orifices peuvent être orientés et configurés pour lubrifier l'accouplement entre les cannelures du solaire 111 et de l'arbre BP. En variante, et comme représenté à la figure 10, le gicleur 142a pourrait être utilisé pour alimenter en huile une cavité interne d'un satellite 116. Cette même figure permet de constater que cette cavité peut être alimentée par plus d'un gicleur 142a du type précité, les gicleurs 142a étant de préférence répartis angulairement autour de l'axe Y de rotation du satellite 116. Cette répartition est de préférence régulière de façon à ce que le porte-satellites 113 soit axi-symétrique d'un point de vue de la position des gicleurs mais aussi idéalement d'un point de vue de la répartition de leur masse. Dans le cas illustré, seule l'orientation des orifices de projection d'huile aux extrémités des gicleurs 142 peut différer d'un gicleur à l'autre, de façon à lubrifier différentes zones (par exemple au nombre de 3) de la cavité interne.

Le gicleur 142b est un gicleur longitudinal ou axial dans la mesure où il s'étend parallèlement à l'axe X et est en particulier aligné avec l'alésage 140. Le gicleur 142b est logé dans l'évidement 144 précité.

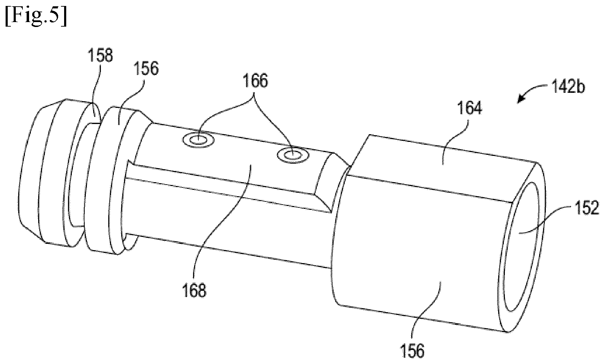

Le gicleur 142b, mieux visible à la figure 5, a une forme générale tubulaire et comprend des tronçons de diamètres différents. Le gicleur 142b est destiné à être engagé dans l'évidement 144 en direction axiale, jusqu'à ce que l'une de ses extrémités longitudinales soit en appui axial contre une surface d'appui 162 de la cage sur laquelle débouche l'extrémité de l'alésage 140 opposée au gicleur 142a.

Dans cette zone, la cage 113a pourrait comprendre un logement femelle d'engagement de l'extrémité longitudinale du gicleur 142b. L'étanchéité serait alors assurée par un joint torique logé dans une rainure annulaire périphérique 158 de cette extrémité du gicleur, comme montré dans les dessins.

L'extrémité opposée de ce gicleur 142b comprend un tronçon de plus grand diamètre qui comprend une surface cylindrique externe 156 de centrage dans l'évidement 144. Le gicleur 142b, et en particulier sa surface 156, peut comprendre un moyen d'indexage avec un moyen complémentaire de la cage. Dans l'exemple représenté, la surface 156 comprend un méplat 164 destiné donc à coopérer par liaison de formes avec un méplat complémentaire de l'évidement 144.

Le tronçon de plus grand diamètre du gicleur 142b peut être configuré pour recevoir par emmanchement mâle-femelle un organe de raccordement à une arrivée d'huile.

Le gicleur 142b comprend plusieurs orifices 166 de projection d'huile et un passage interne 152 de mise en communication fluidique de ces orifices 166 avec l'alésage 140. Le passage 152 s'étend sur toute la dimension axiale du gicleur 142b et débouche à ses deux extrémités axiales. Les orifices 166 sont alignés les uns derrière les autres et sont formés dans un bossage externe 168 du gicleur 142b. Le bossage 168 permet de rallonger la dimension longitudinale des orifices 166 et d'améliorer le guidage de l'huile pour augmenter la précision du jet d'huile en sortie. L'indexage grâce au méplat 164 permet d'orienter les orifices 166 dans une direction choisie, par exemple vers les engrenages entre les dentures d'un satellite 116 et du solaire 111 ou entre les dentures d'un satellite 116 et de la couronne 114. Dans le cas où le porte-satellites 113 comprendrait plusieurs gicleurs 142b, ces gicleurs 142b seraient répartis également autour des axes Y des satellites ou de l'axe X du réducteur 106.

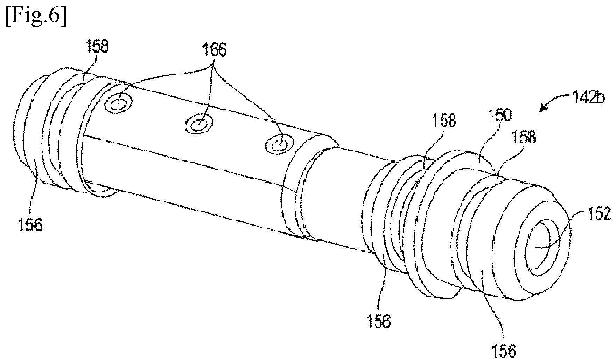

La figure 6 illustre une variante de réalisation du gicleur 142b dans lequel son tronçon de plus grand diamètre est remplacé par une collerette annulaire externe 150 qui est située entre deux surfaces cylindriques externes 156. Chacune de ces surfaces comprend une rainure annulaire 158 de logement d'un joint torique d'étanchéité (non représenté).

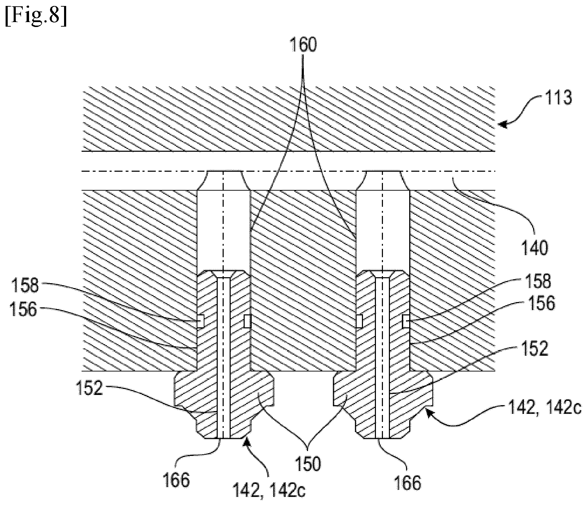

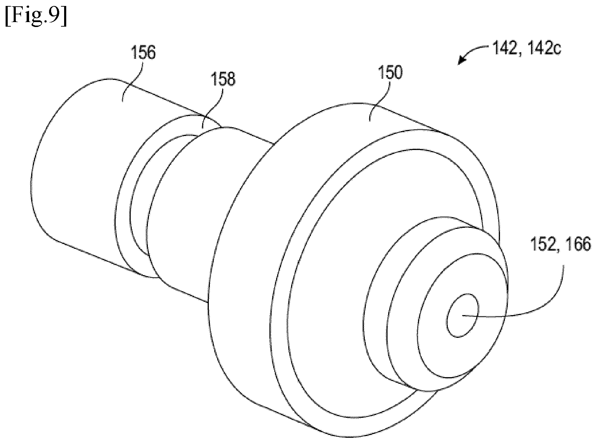

Comme cela est visible à la figure 4, l'alésage 140 peut être relié à d'autres évidements 160, 160'. Ces évidements 160' peuvent être configurés et en particulier dimensionnés pour former des orifices de projection d'huile directement dans le réducteur 106. En variante, les évidements 160 peuvent être dimensionnés pour recevoir d'autres gicleurs 142c, tels que ceux représentés aux figures 8 et 9.

L'alésage 140 peut être raccordé à plusieurs évidements 160 à distance de ses extrémités longitudinales, ces évidements 160 ayant de préférence une orientation transversale par rapport à l'alésage 140 et à l'axe X. Dans l'exemple représenté à la figure 8, les évidements 160 s'étendent dans un même plan passant par l'axe de l'alésage 140 et chaque évidement 160 comprend une surface cylindrique interne de montage et de centrage d'un gicleur 142c.

Chaque gicleur 142c est donc un gicleur transversal dans la mesure où il s'étend perpendiculairement à l'axe X.

Le gicleur 142c a une forme générale tubulaire et comprend une collerette annulaire externe 150 d'appui sur une surface du pontet 113d sur laquelle débouche l'évidement 160.

Le gicleur 142c est destiné à être engagé dans l'évidement 160 jusqu'à ce que sa collerette 150 soit en appui sur cette surface.

Le gicleur 142c comprend une surface cylindrique externe 156 de centrage comprenant une rainure annulaire périphérique 158 de logement d'un joint torique d'étanchéité (non représenté) qui coopère avec la surface interne de l'évidement 160.

Le gicleur 142c comprend un unique orifice 166 de projection d'huile et un passage interne 152 de mise en communication fluidique de cet orifice 166 avec l'alésage 140. L'orifice 166 est ici formé à une extrémité du gicleur 142b et du passage 152 et est donc aligné sur ce passage 152. Il n'est pas indispensable de prévoir un indexage pour ce type de gicleur 142c.

Ce type de gicleurs 142c pourrait être utilisé pour projeter de l'huile vers les engrenages entre les dentures d'un satellite 116 et du solaire 111 ou entre les dentures d'un satellite 116 et de la couronne 114.

Dans une variante non représentée, au moins une partie des évidements de logements des gicleurs 142 pourrait être inclinée avec un certain degré d'inclinaison (différent de 90°) par rapport à l'alésage 140.

## Revendications

1. Porte-satellites (113) pour un réducteur mécanique (106) de turbomachine (1), en particulier d'aéronef, ce porte-satellites comportant :
- une cage (113a) monobloc qui s'étend autour d'un axe X de rotation en définissant un logement interne configuré pour recevoir un solaire (111) et des satellites (116) du réducteur, et
- un système de lubrification comprenant :
- au moins un alésage (140) formé dans la cage (113a) et s'étendant parallèlement à l'axe X sur plus de 30% d'une dimension axiale maximale (Lmax) de la cage, et
- pour ledit ou chaque alésage (140), au moins deux gicleurs (142) rapportés sur la cage, chacun de ces gicleurs étant montés dans un évidement (144, 146a, 160) de la cage et comportant :
+ au moins un orifice (166) de projection d'huile, et
+ un passage interne (152) de mise en communication fluidique dudit au moins un orifice (166) avec ledit alésage (140),
**caractérisé en ce que** le système de lubrification comprend, pour ledit ou chaque alésage (140), un gicleur longitudinal (142b) qui s'étend dans une direction parallèle à l'axe X et qui est monté dans un évidement (144) qui est relié directement à une extrémité longitudinale de l'alésage (140).

2. Porte-satellites (113) selon la revendication 1, dans lequel le système de lubrification comprend, pour ledit ou chaque alésage (140), au moins un gicleur transversal (142a, 142c) qui s'étend dans une direction perpendiculaire à l'axe X et qui est monté dans un évidement (146a, 160) qui est relié directement à l'alésage (140).

3. Porte-satellites (113) selon la revendication 2, dans lequel l'évidement (146a) de montage du gicleur transversal (142a) est situé à une extrémité longitudinale dudit alésage (140).

4. Porte-satellites (113) selon la revendication 2, dans lequel le gicleur transversal (142a) comprend un orifice latéral (154) de mise en communication fluidique dudit alésage (140) avec le passage (152) de ce gicleur transversal (142a).

5. Porte-satellites (113) selon l'une des revendications 2 à 4, dans lequel l'évidement (160) de montage du gicleur transversal (142c) débouche dans ledit alésage (140) à distance des extrémités longitudinales de cet alésage.

6. Porte-satellites (113) selon l'une des revendications précédentes, dans lequel au moins un desdits gicleurs (142) a une forme générale tubulaire et comprend une rainure annulaire périphérique (158) de réception d'un joint torique d'étanchéité.

7. Porte-satellites (113) selon l'une des revendications précédentes, dans lequel au moins un des gicleurs (142) comprend une surface cylindrique externe (156) de centrage configurée pour coopérer directement avec une surface cylindrique interne complémentaire de ladite cage (113a).

8. Porte-satellites (113) selon la revendication 7, dans lequel au moins un des gicleurs (142a, 142b) comprend deux ou trois surfaces cylindriques externes (156) de centrage, distantes l'une de l'autre ou les unes des autres.

9. Porte-satellites (113) selon la revendication 7 ou 8, dans lequel au moins un des gicleurs (142a, 142b) comprend un méplat d'indexage (164) et/ou une collerette annulaire (150) sur sa surface cylindrique externe (156) ou sur l'une de ses surfaces cylindriques externes (156).

10. Porte-satellites (113) selon l'une des revendications précédentes, dans lequel au moins un des gicleurs (142b) comprend deux ou trois, voire plus, orifices de projection (166), qui sont alignés les uns derrière les autres et sont formés dans un bossage externe (168) du gicleur.

11. Porte-satellites (113) selon l'une des revendications précédentes, dans lequel au moins un des gicleurs (142c) comprend un unique orifice de projection qui s'étend directement dans le prolongement du passage interne (152) de ce gicleur.

12. Porte-satellites (113) selon l'une des revendications précédentes, dans lequel il comprend :
- un gicleur longitudinal (142a) raccordé directement à une extrémité longitudinale dudit alésage (140),
- un gicleur transversal (142b) raccordé directement à une extrémité longitudinale opposée dudit alésage (140), et
- un, deux, voire plus, gicleurs transversaux (142c) supplémentaires raccordés audit alésage (140), à distance des extrémités longitudinales de cet alésage (140).

13. Turbomachine (1), en particulier d'aéronef, comportant un réducteur mécanique équipé d'un porte-satellites (113) selon l'une des revendications précédentes.

## Patentansprüche

1. Planetenträger (113) für ein mechanisches Untersetzungsgetriebe (106) einer Turbomaschine (1), insbesondere eines Luftfahrzeugs, wobei dieser Planetenträger umfasst:
- einen einstückigen Käfig (113a), der sich um eine Drehachse X erstreckt und eine innere Aufnahme definiert, die dazu ausgelegt ist, ein Sonnenrad (111) und Planeten (116) des Untersetzungsgetriebes aufzunehmen; und
- ein Schmiersystem, umfassend:
- mindestens eine Bohrung (140), die im Käfig (113a) gebildet ist und sich über mehr als 30% einer maximalen axialen Abmessung (Lmax) des Käfigs parallel zur Achse X erstreckt, und
- für die oder jede Bohrung (140), mindestens zwei Düsen (142), die am Käfig angestückt sind, wobei jede dieser Düsen in einer Aussparung (144, 146a, 160) des Käfigs angebracht ist und Folgendes umfasst:
- mindestens eine Ölprojektionsöffnung (166), und
- einen inneren Durchgang (152) zum Herstellen strömungstechnischer Kommunikation der mindestens einen Öffnung (166) mit der Bohrung (140),
**dadurch gekennzeichnet, dass** das Schmiersystem für die oder jede Bohrung (140) eine längslaufende Düse (142b) umfasst, die sich in einer Richtung parallel zur Achse X erstreckt und die in einer Aussparung (144) angebracht ist, die unmittelbar mit einem Längsende der Bohrung (140) verbunden ist.

2. Planetenträger (113) nach Anspruch 1, wobei das Schmiersystem für die oder jede Bohrung (140) mindestens eine querliegende Düse (142a, 142c) umfasst, die sich in einer Richtung senkrecht zur Achse X erstreckt und die in einer Aussparung (146a, 160) angebracht ist, die unmittelbar mit der Bohrung (140) verbunden ist.

3. Planetenträger (113) nach Anspruch 2, wobei die Aussparung (146a) zum Anbringen der querliegenden Düse (142a) an einem Längsende der Bohrung (140) gelegen ist.

4. Planetenträger (113) nach Anspruch 2, wobei die querliegende Düse (142a) eine seitliche Öffnung (154) zum Herstellen strömungstechnischer Kommunikation der Bohrung (140) mit dem Durchgang (152) dieser querliegenden Düse (142a) umfasst.

5. Planetenträger (113) nach einem der Ansprüche 2 bis 4, wobei die Aussparung (160) zum Anbringen der querliegenden Düse (142c) in die Bohrung (140) in einem Abstand zu den Längsenden dieser Bohrung mündet.

6. Planetenträger (113) nach einem der vorstehenden Ansprüche, wobei mindestens eine der Düsen (142) eine allgemein röhrenförmige Form aufweist und eine umlaufende ringförmige Nut (158) zur Aufnahme einer O-Ring-Dichtung umfasst.

7. Planetenträger (113) nach einem der vorstehenden Ansprüche, wobei mindestens eine der Düsen (142) eine äußere zylindrische Oberfläche (156) zur Zentrierung umfasst, die dazu ausgelegt ist, unmittelbar mit einer komplementären inneren zylindrischen Oberfläche des Käfigs (113a) zusammenzuwirken.

8. Planetenträger (113) nach Anspruch 7, wobei mindestens eine der Düsen (142a, 142b) zwei oder drei äußere zylindrische Oberflächen (156) zur Zentrierung umfasst, die voneinander beabstandet sind.

9. Planetenträger (113) nach Anspruch 7 oder 8, wobei mindestens eine der Düsen (142a, 142b) auf ihrer äußeren zylindrischen Oberfläche (156) oder auf einer ihrer äußeren zylindrischen Oberflächen (156) eine Indexierungsflachstelle (164) und/oder einen ringförmigen Kragen (150) umfasst.

10. Planetenträger (113) nach einem der vorstehenden Ansprüche, wobei mindestens eine der Düsen (142) zwei oder drei, sogar mehr, Projektionsöffnungen (166) umfasst, die hintereinander aufgereiht sind und in einem äußeren Vorsprung (168) der Düse gebildet sind.

11. Planetenträger (113) nach einem der vorstehenden Ansprüche, wobei mindestens eine der Düsen (142c) eine einzige Projektionsöffnung umfasst, die sich unmittelbar in der Verlängerung des inneren Durchgangs (152) dieser Düse erstreckt.

12. Planetenträger (113) nach einem der vorstehenden Ansprüche, wobei er Folgendes umfasst:
- eine längslaufende Düse (142a), die unmittelbar an einem Längsende der Bohrung (140) angeschlossen ist,
- eine querliegende Düse (142b), die unmittelbar an einem gegenüberliegenden Längsende der Bohrung (140) angeschlossen ist, und
- eine, zwei, sogar mehr, zusätzliche querliegende Düsen (142c), die an der Bohrung (140) in einem Abstand von den Längsenden dieser Bohrung (140) angeschlossen sind.

13. Turbomaschine (1), insbesondere eines Luftfahrzeugs, die einen mit einem mechanischen Untersetzungsgetriebe ausgerüsteten Planetenträger (113) nach einem der vorstehenden Ansprüche umfasst.

## Claims

1. A planet carrier (113) for a mechanical gearbox (106) for a turbomachine (1), in particular for an aircraft, this planet carrier comprising:
- a one-piece cage (113a) that extends about an axis X of rotation defining an internal housing configured to receive a sun gear (111) and planet gears (116) of the gearbox, and
- a lubrication system comprising:
- at least one bore (140) formed in the cage (113a) and extending parallel to the axis X over more than 30% of a maximum axial dimension (Lmax) of the cage, and
- for said or each bore (140), at least two sprinklers (142) fitted on the cage, each of these sprinklers being mounted in a recess (144, 146a, 160) of the cage and comprising:
+ at least one oil spray orifice (166), and
+ an internal passage (152) for fluidly communicating said at least one orifice (166) with said bore (140),
**characterised in that** the lubrication system comprises, for said or each bore (140), a longitudinal sprinkler (142b) which extends in a direction parallel to the axis X and which is mounted in a recess (144) which is directly connected to a longitudinal end of the bore (140).

2. The planet carrier (113) of claim 1, wherein the lubrication system comprises, for said or each bore (140), at least one transverse sprinkler (142a, 142c) which extends in a direction perpendicular to the axis X and which is mounted in a recess (146a, 160) which is directly connected to the bore (140).

3. The planet carrier (113) of claim 2, wherein the recess (146a) for mounting the transverse sprinkler (142a) is located at a longitudinal end of said bore (140).

4. The planet carrier (113) according to claim 2, wherein the transverse sprinkler (142a) comprises a lateral orifice (154) for fluidly communicating said bore (140) with the passage (152) of this transverse sprinkler (142a).

5. The planet carrier (113) according to any of claims 2 to 4, wherein the recess (160) for mounting the transverse sprinkler (142c) opens into said bore (140) spaced from the longitudinal ends of said bore.

6. The planet carrier (113) according to any of the preceding claims, wherein at least one of said sprinklers (142) is generally tubular in shape and comprises a peripheral annular groove (158) for receiving an O-ring seal.

7. The planet carrier (113) according to any of the preceding claims, wherein at least one of the sprinklers (142) comprises an external cylindrical centring surface (156) configured to cooperate directly with a complementary internal cylindrical surface of said cage (113a).

8. The planet carrier (113) of claim 7, wherein at least one of the sprinklers (142a, 142b) comprises two or three external cylindrical centring surfaces (156), spaced apart from each other.

9. The planet carrier (113) according to claim 7 or 8, wherein at least one of the sprinklers (142a, 142b) comprises an indexing flat (164) and/or an annular collar (150) on its external cylindrical surface (156) or on one of its external cylindrical surfaces (156).

10. The planet carrier (113) according to any of the preceding claims, wherein at least one of the sprinklers (142b) comprises two or three or more spray orifices (166), which are aligned one behind the other and are formed in an external boss (168) of the sprinkler.

11. The planet carrier (113) according to any of the preceding claims, wherein at least one of the sprinklers (142c) comprises a single spray orifice which extends directly into the extension of the internal passage (152) of that sprinkler.

12. The planet carrier (113) according to one of the preceding claims, wherein it comprises:
- a longitudinal sprinkler (142a) connected directly to a longitudinal end of said bore (140),
- a transverse sprinkler (142b) connected directly to an opposite longitudinal end of said bore (140), and
- one, two or more additional transverse sprinklers (142c) connected to said bore (140), spaced from the longitudinal ends of this bore (140).

13. A turbomachine (1), in particular for aircraft, comprising a mechanical gearbox equipped with a planet carrier (113) according to one of the preceding claims.
